# EUROPÄISCHE PATENTANMELDUNG

(11) **EP 3 379 628 A1**
(43) Veröffentlichungstag der Anmeldung: **26.09.2018**
(21) Anmeldenummer: 18000216.4
(22) Anmeldetag: 06.03.2018
(51) Int. Cl.: H01M 6/38

(54) **AKTIVIERUNGSEINRICHTUNG FÜR EINE BATTERIE FÜR EINEN ELEKTRONISCHEN ZÜNDMECHANISMUS**

(30) Priorität: 23.03.2017 DE 102017002803
(71) Anmelder: Diehl & Eagle Picher GmbH, 90552 Röthenbach (DE)
(72) Erfinder: Wich, Harald, DE - 91207 Lauf (DE); Hein, Roland, DE - 90453 Nürnberg (DE)
(74) Vertreter: Diehl Patentabteilung

(57) **Zusammenfassung**

Aktivierungseinrichtung für eine Batterie für einen elektronischen Zündmechanismus, umfassend eine mit einem Elektrolyten (2) gefüllte Ampulle (3) sowie eine Einrichtung (4) zum Zerbrechen der Ampulle (3) umfassend wenigstens ein die Ampulle (3) tragendes Lagerelement (5), das über wenigstens einen Verbindungssteg (6) mit einem Träger (7), auf den die Ampulle (3) bei einem beschleunigungsbedingten Brechen des Verbindungsstegs (6) aufschlägt, verbunden ist, wobei wenigstens ein beschleunigungsbedingt bewegbares Zusatzmasseelement (9) vorgesehen ist, das über wenigstens ein Dämpfungselement (10) von der Ampulle (3) entkoppelt ist.

## Beschreibung

Die Erfindung betrifft eine Aktivierungseinrichtung für eine Batterie für einen elektronischen Zündmechanismus, umfassend eine mit einem Elektrolyten gefüllte Ampulle sowie eine Einrichtung zum Zerbrechen der Ampulle umfassend wenigstens ein die Ampulle tragendes Lagerelement, das über wenigstens einen Verbindungssteg mit einem Träger, auf den die Ampulle bei einem beschleunigungsbedingten Brechen des Verbindungsstegs aufschlägt, verbunden ist.

Eine solche Aktivierungseinrichtung dient zum Aktivieren einer Batterie für einen elektronischen Zündmechanismus eines Geschosses, das über ein Waffenrohr verschießbar ist. Eine solche Aktivierungseinrichtung, wie vorstehend beschrieben, ist beispielsweise aus EP 1 467 423 A2 bekannt. Mit dem Verschießen wird die Aktivierungseinrichtung betätigt, so dass die Ampulle aufgebrochen wird und der Elektrolyt die benachbarten Batteriezellen galvanisch aktiviert.

Der Aktivierungsmechanismus, wie hier beispielsweise auch aus EP 1 467 423 A2 bekannt ist, umfasst neben der Ampulle auch eine entsprechende Einrichtung zum Zerbrechen derselben. Hierzu ist die Ampulle auf einem vorzugsweise ringförmigen Lagerelement aufgelagert, das über wenige schmale Verbindungsstege mit einem Träger verbunden ist, der im Inneren des ringförmigen Lagerelements angeordnet ist, mitten also unterhalb der Ampulle positioniert ist. Wird nun das Geschoss verschossen, so wirkt beschleunigungsbedingt eine hohe Kraft auf die Ampulle und über diese auf das Lagerelement, was dazu führt, dass die Verbindungsstege abgeschert werden und die Ampulle quasi freigegeben wird, so dass sie gegen den Träger schlägt, was zum Brechen der Ampulle und damit zur Aktivierung der Batterie führt. Um diese Aktivierung zu erwirken ist eine" Auslöseschwelle" zu überschreiten, mithin also eine hinreichende Krafteinwirkung durch die Abschussbeschleunigung zu erzielen, damit die Verbindungsstege abgeschert werden und es zum Aufbrechen der Ampulle kommt.

Neben der bestimmungsgemäßen Aktivierung ab einem bestimmten Beschleunigungsniveau ist jedoch aus Sicherheitsgründen auch eine Nichtaktivierung in Fällen sicherzustellen, in denen es zwar zu einer Beschleunigung kommt, diese jedoch nicht gewollt ist, beispielsweise wenn das Geschoss zu Boden fällt. Auch hierbei kommt es mitunter zu einer beachtlichen Beschleunigung. Aus Sicherheitsgründen sollte also die "Auslöseschwelle" relativ hoch sein, demgegenüber wird jedoch oft eine relativ niedrige Auslöseschwelle gefordert, insbesondere wenn der Verschuss mit niedriger Abschussbeschleunigung erfolgt. Solche niedrigen Abschussbeschleunigungen liegen bei etwa dem 1000-2000-fachen der Erdbeschleunigung. Demgegenüber werden bei entsprechenden Falltests weit höhere Beschleunigungen auftreten.

EP 1 467 423 A2 begegnet diesem Problem durch eine entsprechend hoch ausgelegte Auslöseschwelle, indem die Verbindungsstege derart ausgelegt werden, dass sie bis zu dem 5000-fachen der Erdbeschleunigung Stand halten. Das heißt, dass hier quasi eine mittlere Auslöseschwelle realisiert wird. Damit aber können Geschosse mit einer niedrigen Auslöseschwelle mit der hieraus bekannten Aktivierungseinrichtung nicht ausgerüstet werden.

Der Erfindung liegt demnach das Problem zu Grunde, eine demgegenüber verbesserte Aktivierungseinrichtung anzugeben.

Zur Lösung dieses Problems ist bei einer Aktivierungseinrichtung der eingangs genannten Art erfindungsgemäß wenigstens ein beschleunigungsbedingt bewegbares Zusatzmasseelement vorgesehen, das über wenigstens ein Dämpfungselement von der Ampulle entkoppelt ist.

Erfindungsgemäß ist vorgesehen, die Gesamtmasse, die zum Aufbrechen der Ampulle zu beschleunigen ist, über ein beschleunigungsbedingt ebenfalls bewegbares Zusatzmasseelement zu vergrößern. Um jedoch zu vermeiden, dass durch eine einfache Masseerhöhung dieses Gewicht auch beim Falltest die Verbindungsstege belastet und die Fallsicherheit dann zwangsläufig reduziert, ist diese Zusatzmasse erfindungsgemäß über wenigstens ein Dämpfungselement von der Ampulle entkoppelt. Dies führt dazu, dass einerseits eine hinreichende Sicherheit im Rahmen des Falltests gegeben ist, andererseits aber auch eine hinreichend niedrige Auslöseschwelle gegeben ist.

Denn bei einem Falltest ist die Beschleunigungseinwirkung relativ kurz, so dass das Dämpfungselement noch komprimierbar ist, mithin also nur etwas komprimiert ist und folglich nicht auf Block läuft, so dass das Zusatzmasseelement nicht direkt mit der Ampulle gekoppelt ist und mithin nicht die gesamte Masse auf die Verbindungsstege wirkt. Sobald die falltestbedingte Beschleunigung gegen Null geht, stellt das elastische Dämpfungselement das Zusatzmasseelement wieder in die Ausgangsstellung zurück.

Bei einem Verschuss jedoch ist die Beschleunigungseinwirkung so lange, dass der Bereich der Komprimierbarkeit des Dämpfungselements überschritten wird, dieses also vollständig komprimiert wird und auf Block läuft, so dass die Zusatzmasse mit ihrer vollen Kraft aus Masse x Beschleunigung auf die Ampulle wirkt und zusammen mit deren Masse auf die Verbindungsstege. Diese werden damit mit der Gesamtmasse aus Ampulle nebst Elektrolyt sowie Zusatzmasseelement und Dämpfungselement belastet, so dass es zu einem Abscheren kommt. Dieses Abscheren der Verbindungsstege setzt jedoch zeitlich etwas verzögert ein, da die Verbindungsstege zeitlich verzögert mit der Gesamtmasse beaufschlagt werden, da zunächst das Dämpfungselement vollständig komprimiert werden muss. Durch die Auslegung der elastischen Eigenschaften des Dämpfungselements kann dieser Kraft-Zeit-Verlauf bestimmt oder eingestellt werden.

Damit lässt die erfindungsgemäße Aktivierungseinrichtung die Realisierung einer niedrigen Auslöseschwelle zu. Denn bei einem regulären Verschuss wirkt eine hohe Masse aus Ampulle nebst Elektrolyt sowie Zusatzelement und Dämpfungselement auf die Verbindungsstege, so dass diese abscheren und es zum Aufbrechen der Ampulle beim Aufschlagen auf den Träger kommt. Denn in diesem Fall ist ein hinreichend langer Beschleunigungsvorgang gegeben.

Gleichzeitig jedoch ist die erfindungsgemäße Aktivierungseinrichtung auch hinreichend sicher, um bei einer ungewollten Beschleunigung nicht aktiviert zu werden. Denn in diesem Fall dämpft das nach wie vor elastische Dämpfungselement die Zusatzelementbewegung, dieses Zusatzmasseelement ist nach wie vor von der Ampulle entkoppelt. Es wirkt also lediglich die Masse der Ampulle nebst Elektrolyt für den kurzen Fallbeschleunigungsmoment auf die Verbindungsstege. Die Masse jedoch ist nicht ausreichend, um die Verbindungsstege abzuscheren.

Das Zusatzmasseelement kann dabei über das Dämpfungselement direkt mit der Ampulle verbunden sein, das heißt, dass die Ampulle, üblicherweise eine nach dem Befüllen mit dem Elektrolyt zugeschmolzene Glasampulle, und das Zusatzelement über das sie verbindende Dämpfungselement eine Baueinheit bilden. Alternativ ist es auch denkbar, dass das Dämpfungselement an dem Zusatzmasseelement oder Ampulle angeordnet und von der Ampulle oder dem Zusatzmasseelement beabstandet ist. Hier ist also das Dämpfungselement an dem einen oder anderen Teil angeordnet, so dass Zusatzmasseelement und Ampulle keine gemeinsame Baueinheit bilden, da sie über das Dämpfungselement nicht miteinander verbunden sind. Die Kopplung erfolgt erst, wenn es zu einer hinreichend langen Bewegung des Zusatzmasseelements kommt.

Wenngleich es ausreichend ist, nur ein Dämpfungselement vorzusehen, das entsprechend ausgelegt ist, können natürlich auch mehrere Dämpfungselemente vorgesehen sein. Dabei kann das oder jedes Dämpfungselement als länglicher Steg oder als Feder oder als elastischer Materialblock, insbesondere im Falle nur eines Dämpfungselements, ausgeführt sein. Es können also beispielsweise mehrere längliche Stege vorgesehen sein, die entweder das Zusatzmasseelement und die Ampulle verbinden oder an dem einen oder anderen Bauteil angeordnet sind. Alternativ können auch entsprechende Federelemente wie Schraubenfedern verwendet werden, die die beschriebenen Stege ersetzen. Auch kann ein entsprechend ausgelegter elastischer Materialblock beispielsweise zwischen Zusatzmasseelement und Ampulle, diese verbindend, angeordnet sein. Die Ausgestaltungen sind hier beliebig, solange das erfindungsgemäße Funktionsprinzip realisiert wird. Wie bereits beschrieben kann je nach Auslegung der Anzahl, Geometrie und Eigenschaften des oder der Dämpfungselemente der Kraft- und Zeitverlauf der Massebewegung und damit der Aktivierung eingestellt werden.

Das Dämpfungselement selbst ist aus einem elastischen Material, insbesondere einem Polymer, wobei sich hierfür jedes Elastomer eignet, wie aber auch ein Silikon verwendet werden kann. Dabei kann das Material blasenfrei oder als Schaum verwendet werden, je nach verwendetem elastischen Material respektive Polymermaterial.

Das Lagerelement selbst ist, wie bereits beschrieben, über wenigstens einen Verbindungssteg, vorzugsweise über mehrere, insbesondere drei Verbindungsstege mit dem Träger verbunden. In diesem Zusammenhang ist es besonders zweckmäßig, wenn die Stegbreite des oder jedes Verbindungsstegs gesehen in Umfangsrichtung kleiner als die Steghöhe ist. Das heißt, dass, gesehen in Bewegungsrichtung der Ampulle, die Steghöhe größer gewählt wird als die Stegbreite in Umfangsrichtung. Da sich die Ampulle quasi in Richtung der Steghöhe bzw. parallel zu dieser bewegt, kann durch entsprechende Erhöhung der Steghöhe die Steglänge oder -strecke, die abgeschert werden muss, vergrößert werden. Durch diese Vergrößerung der Steghöhe wird die Krafteinwirkung über einen längeren Zeitabschnitt benötigt, um die gesamte Höhe der Verbindungsstege vollständig zu durchtrennen, wobei hierbei insbesondere von einem Stegmaterial ausgegangen wird, bei dem es nicht oder nur in geringem Umfang zu Spontanbruch kommt, wenn die Belastungsgrenze überschritten wird.

Dabei sollte das Verhältnis von Stegbreite zu Steghöhe zwischen 1:1,1 und 1:3 liegen, vorzugsweise wenigstens 1:1,5 und insbesondere wenigstens 1:2 betragen. Ausgehend von einer bekannten Aktivierungseinrichtung mit über Verbindungsstege angebundenem Lagerelement ist es nicht erforderlich, hierzu die Verbindungsstege in ihrer Querschnittsfläche zu erhöhen, vielmehr kann die Querschnittsfläche sogar nahezu unverändert verbleiben, indem die Stegbreite gesehen in Umfangsrichtung reduziert und die Steghöhe vergrößert wird. Denn die Steghöhe geht wesentlich in die Standfestigkeit der Verbindungsstege und damit ihre "Absorptionsfähigkeit" in Bezug auf kurze Fallimpulse ein.

Wenngleich vorstehend insbesondere drei Verbindungsstege als zweckmäßig angegeben wurden, so kann die Steganzahl je nach Anwendungsfall auch höher ausgelegt werden.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Aktivierungseinrichtung einer ersten Ausführungsform im unbelasteten Zustand,
- Fig. 2 bis 5: verschiedene Darstellungen der Aktivierungseinrichtung aus Fig. 1 mit zunehmender beschleunigungsbedingter Belastung bis zum Ampullenbruch,
- Fig. 6: eine Prinzipdarstellung einer Aktivierungseinrichtung einer zweiten Ausführungsform, und
- Fig. 7: eine Prinzipdarstellung einer Aktivierungseinrichtung einer dritten Ausführungsform.

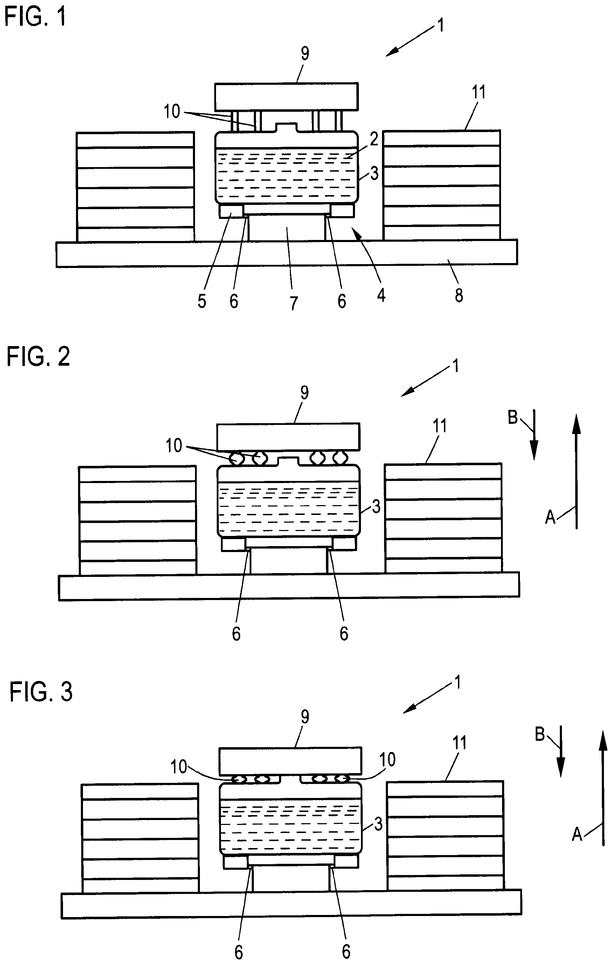

Fig. 1 zeigt eine erfindungsgemäße Aktivierungseinrichtung 1 für eine Batterie für einen elektronischen Zündmechanismus, umfassend eine mit einem Elektrolyt 2 gefüllte Ampulle 3, üblicherweise aus Glas, die nach dem Befüllen mit dem Elektrolyten zugeschmolzen ist.

Vorgesehen ist des Weiteren eine Einrichtung 4 zum Zerbrechen der Ampulle 3, umfassend ein die Ampulle 3 tragendes, hier ringförmiges Lagerelement 5, das im gezeigten Beispiel über zwei Verbindungsstege 6 mit einem Träger 7, der auf einer Trägerplatte 8 angeordnet ist, verbunden ist. Wenngleich hier zwei Verbindungsstege 6 gezeigt sind, ist es selbstverständlich auch denkbar, beispielsweise drei oder vier oder mehr äquidistant verteilte Verbindungsstege 6 vorzusehen.

Gezeigt ist ferner ein Zusatzmasseelement 9, das über mehrere Dämpfungselemente 10 hier mit der Ampulle 3 direkt verbunden ist. Ersichtlich ist das Zusatzmasseelement 9 über die Dämpfungselemente 10 von der Ampulle 3 beabstandet, also entkoppelt.

Dargestellt ist ferner eine stapelförmige Batteriezelle 11, die die Ampulle 3 umgibt, und die über den Elektrolyten 2, wenn die Ampulle 3 gebrochen ist, galvanisch aktiviert werden kann.

Gemäß Fig. 1 sind hier die Dämpfungselemente 10 als längliche Verbindungsstege ausgeführt. Sie bestehen aus einem elastischen Material, vorzugsweise einem Polymermaterial, das die gewünschte Elastizität aufweist. Hierfür kann auch ein Silikon verwendet werden. Es kann sich um ein blasen- oder zellenfreies Material handeln, gleichermaßen aber auch um ein Schaummaterial. Die grundsätzliche Funktion der Dämpfungselemente 10 ist, kurzzeitige Beschleunigungen des Zusatzmasseelements 9 zu bedämpfen, so dass das Gewicht der Zusatzmasse 9 nicht auf der ebenfalls beschleunigten Ampulle 3 lastet bzw. auf dieser aufschlägt und demzufolge die Verbindungsstege 6 nicht abgeschert werden. Erst wenn die Beschleunigung derart lange anhält und derart groß ist, dass die Dämpfungselemente 10 komplett einfedern und quasi auf Block gehen wirkt eine Gesamtmasse und damit eine Gesamtkraft auf die Verbindungsstege 6, dass diese abgeschert werden.

An dieser Stelle ist festzuhalten, dass die Höhe der Verbindungsstege gesehen in Richtung der Bewegung von Ampulle 3 und Zusatzmasse 9 größer ist als die Breite der Verbindungsstege gesehen in Umfangsrichtung, ausgehend von einem ringförmigen Lagerelement. Hierüber kann das Abscherverhalten respektive das "Absorptionsverhalten" der Verbindungsstege gegen die einwirkende Kraft eingestellt respektive verglichen mit bisher bekannten Ausgestaltungen erhöht werden.

Fig. 2 zeigt in einer ersten Ansicht ein Beispiel, bei dem die Aktivierungseinrichtung in Richtung des Pfeils A beschleunigt wird. Es kommt dabei beschleunigungsbedingt zu einer Bewegung des Zusatzmasseelements 9 in Richtung des Pfeils B, also entgegengesetzt zur Abschuss- respektive Beschleunigungsrichtung A, was dazu führt, dass die Dämpfungselemente 10 leicht einfedern. Die Ampulle 3 ist noch in Ruhe, da sie zwar ebenfalls beschleunigt wird und auf sie ebenfalls in Richtung des Pfeils B eine beschleunigungsbedingte Kraft wirkt, diese ist jedoch nicht geeignet, die Verbindungsstege 6 abzuscheren.

Es wird angenommen, dass die Beschleunigung A in einem Falltest erzeugt wird, der üblicherweise nur sehr kurz dauert, das heißt, dass der Beschleunigungsimpuls, der zu einer Bewegung des Zusatzmasseelements 9 in Richtung des Pfeils B wirkt, relativ kurz ist. Es kommt also nur zu einem kurzzeitigen Einfedern der Dämpfungselemente 10. Sobald die Beschleunigung beendet ist, wirkt auf das Zusatzmasseelement 9 keine Kraft mehr, die eingefederten Dämpfungselemente 10, also die Verbindungsstege, federn wieder aus und stellen das Zusatzmasseelement 9 in die in Fig. 1 gezeigte Ausgangsposition zurück.

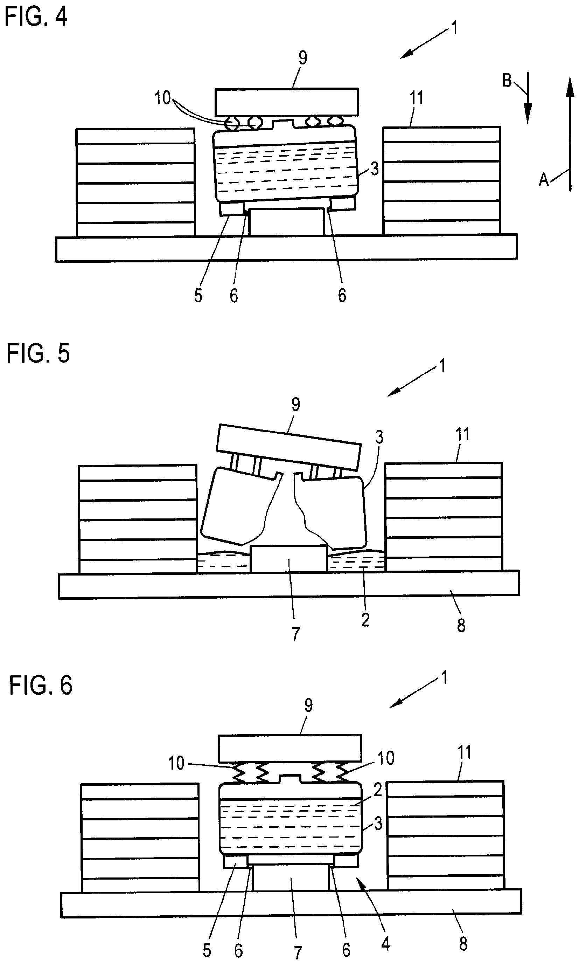

Hält bei einem regulären Abschuss jedoch die Beschleunigung länger an, so kommt es zu einem weiteren Einfedern der Dämpfungselemente 10, siehe Fig. 3. Diese laufen quasi auf Block, das Zusatzmasseelement 9 läuft gegen die Ampulle 3. Ab diesem Zeitpunkt wirkt die gesamte aus der Masse der Ampulle 3 nebst Elektrolyt 2, Zusatzmasseelement 9 und den Dämpfungselementen 10 resultierende Kraft auf das Lagerelement 5 und damit auf die Verbindungsstege 6. Es kommt nun bei fortgesetzter Beschleunigung, siehe Fig. 4, zu einem Abscheren der Verbindungsstege 6, das heißt, dass sich das ringförmige Lagerelement 5 vom Träger 7 löst, wie in Fig. 4 gezeigt. Die Anordnung aus Ampulle 3 und Zusatzmasseelement 9 bewegt sich nun gemeinsam in Richtung des Trägers 7. Bei fortgesetzter Bewegung schlägt, wie Fig. 4 zeigt, die Ampulle 3 am Träger 7 auf, es kommt, siehe Fig. 5, zum Bruch der Ampulle 3, die hier aufgebrochen dargestellt ist. Der Elektrolyt 2 ergießt sich in den benachbarten Raum und aktiviert hierüber die Batteriezelle 11.

Über die erfindungsgemäße Aktivierungseinrichtung kann folglich einerseits eine hohe Sicherheit im Falltest, also gegenüber einer unbeabsichtigten Beschleunigung erreicht werden, wie auch eine geringe Auslöseschwelle im Falle eines regulären Verschusses realisiert werden kann. Denn beim Falltest ist die Beschleunigungswirkung so kurz, dass die Dämpfungselemente 10 nur kurzzeitig und um ein kurzes Stück komprimiert werden, ohne dass es zu einer Massekopplung von Zusatzmasseelement und Ampulle 3 kommt. Es wirkt folglich trotz der gegebenen falltestbedingten Beschleunigung nur eine geringe Kraft auf die Verbindungsstege 6, nämlich im wesentlichen nur die der Ampulle 3 nebst Elektrolyt 2, das Zusatzmasseelement 9 ist über die Dämpfungselemente 10 entkoppelt.

Bei einem regulären Verschuss jedoch ist die Beschleunigungseinwirkung so lang, dass die Dämpfungselemente 10 komplett einfedern und auf Block laufen, so dass die Gesamtmasse aus Ampulle 3, Elektrolyt 2 und Zusatzmasseelement 9 respektive die beschleunigungsbedingt hieraus resultierende Kraft auf die Verbindungsstege 6 wirkt, die dabei abscheren und es zum Ampullenbruch kommt. Die Verbindungsstege 6 können derart ausgelegt werden, dass sie mit einer relativ niedrigen Auslöseschwelle abgeschert werden, die jedoch auf Grund der Entkopplung der Zusatzmasse 9 erst dann erreicht bzw. überschritten wird, wenn die aus der Gesamtmasse aus Ampulle 3, Elektrolyt 2 und Zusatzmasseelement 9 beschleunigungsbedingt resultierende Kraft auf sie wirkt. Allein die aus der Ampulle 3 nebst Elektrolyt 2 resultierende beschleunigungsbedingte Kraft ist jedoch nicht ausreichend, um die Verbindungsstege 6 abzuscheren, insbesondere wenn der Wirkimpuls kurz ist.

Fig. 6 zeigt eine weitere Ausgestaltung einer erfindungsgemäßen Aktivierungseinrichtung 1, wobei für gleiche Bauteile gleiche Bezugszeichen verwendet werden. Vorgesehen ist wiederum eine Ampulle 3 mit darin befindlichem Elektrolyten 2 sowie eine Einrichtung 4 zum Zerbrechen der Ampulle 3 mit ringförmigem Lagerelement 5 und Verbindungsstegen 6, über die das Lagerelement 5 an dem Träger 7 angeordnet ist.

Das Zusatzmasseelement 9 ist auch hier über Dämpfungselemente 10 elastisch mit der Ampulle 3 verbunden, jedoch über die Dämpfungselemente 10 entkoppelt. Die Dämpfungselemente 10 sind hier jedoch als Federn, beispielsweise Schraubenfedern, ausgeführt. Sie sind bevorzugt ebenfalls aus einem elastischen Polymer gefertigt.

Wenngleich hier vier Federn dargestellt sind, können selbstverständlich auch mehr solche Federn vorgesehen sein, wobei die Federn, wie natürlich auch die Verbindungsstege aus den vorstehenden Figuren, äquidistant und symmetrisch verteilt angeordnet sind.

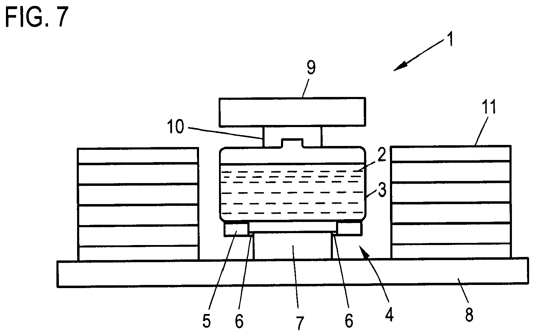

Schließlich zeigt Fig. 7 eine Ausführungsform einer Aktivierungseinrichtung 1, umfassend eine mit Elektrolyt 2 befüllte Ampulle 3 nebst Lagerelement 5 und Träger 7 sowie diese verbindende Verbindungsstege 6. Hier ist das Zusatzmasseelement 9 über ein einzelnes Dämpfungselement 10 in Form eines Materialblocks aus einem elastischen Material wie einem entsprechend elastischen Polymer bzw. Elastomer oder Silikon verbunden. Auch dieses Dämpfungselement federt, ähnlich wie die Verbindungsstege oder die Federn, bei einer entsprechenden beschleunigungsbedingten Belastung ein und stellt, wenn diese kurz genug ist, das Zusatzmasseelement 9 wieder in die Ausgangsstellung zurück, ohne dass es zu einer Massekopplung mit der Ampulle 3 kommt. Erst wenn die Beschleunigung hinreichend lang anhält federt das Dämpfungselement 10 vollständig ein und geht auf Block, so dass das Zusatzmasseelement 9 mit der Ampulle 3 gekoppelt ist und es in ähnlicher Weise wie zu den Fig. 2 bis 5 beschrieben zum Bruch der Ampulle 3 und damit zur Aktivierung der Batterie kommt.

Abschließend ist festzuhalten, dass anstelle der gezeigten Geometrien des oder der Dämpfungselemente 10 natürlich auch andere Geometrien denkbar sind, wie beispielsweise Kegelformen oder ähnliches. Die Verwendung eines Silikons hat schließlich den Vorteil, dass durch die Hysterese des Materials eine Dämpfung ohne Aufschwingen des Systems möglich ist. Durch Form und Anordnung der Dämpfungselemente sowie die entsprechenden Materialeigenschaften lässt sich die gewünschte "Übertragungseigenschaft" der Dämpfungselemente respektive die Kopplung zwischen Zusatzmasseelement 9 und Ampulle 3 in weiten Bereichen einstellen.

Schließlich ist festzuhalten, dass die Dämpfungselemente 10 das Zusatzmasseelement 9 und die Ampulle 3 nicht zwingend bereits im Ausgangszustand mechanisch miteinander verbinden müssen. Vielmehr ist es denkbar, dass beide auch voneinander beabstandet sind, zwischen ihnen jedoch am einen oder anderen Bauteil das Dämpfungselement angeordnet ist.

### Bezugszeichenliste

- 1: Aktivierungseinrichtung
- 2: Elektrolyt
- 3: Ampulle
- 4: Einrichtung zum Zerbrechen der Ampulle
- 5: Lagerelement
- 6: Verbindungsstege
- 7: Träger
- 8: Trägerplatte
- 9: Zusatzmasseelement
- 10: Dämpfungselemente
- 11: Batteriezelle

## Patentansprüche

1. Aktivierungseinrichtung für eine Batterie für einen elektronischen Zündmechanismus, umfassend eine mit einem Elektrolyten (2) gefüllte Ampulle (3) sowie eine Einrichtung (4) zum Zerbrechen der Ampulle (3) umfassend wenigstens ein die Ampulle (3) tragendes Lagerelement (5), das über wenigstens einen Verbindungssteg (6) mit einem Träger (7), auf den die Ampulle (3) bei einem beschleunigungsbedingten Brechen des Verbindungsstegs (6) aufschlägt, verbunden ist,
**dadurch gekennzeichnet,**
**dass** wenigstens ein beschleunigungsbedingt bewegbares Zusatzmasseelement (9) vorgesehen ist, das über wenigstens ein Dämpfungselement (10) von der Ampulle (3) entkoppelt ist.

2. Aktivierungseinrichtung nach Anspruch 1,
**dadurch gekennzeichnet,**
**dass** das Zusatzmasseelement (9) und die Ampulle (3) über das Dämpfungselement (10) miteinander verbunden sind, oder dass das Dämpfungselement (10) an dem Zusatzmasseelement (9) oder der Ampulle (3) angeordnet und von der Ampulle (3) oder dem Zusatzmasseelement (9) beanstandet ist.

3. Aktivierungseinrichtung nach Anspruch 1 oder 2,
**dadurch gekennzeichnet,**
**dass** das mehrere Dämpfungselemente (10) vorgesehen sind.

4. Aktivierungseinrichtung nach einem der vorangehenden Ansprüche,
**dadurch gekennzeichnet,**
**dass** das oder jedes Dämpfungselement (10) als länglicher Steg oder als Feder oder als elastischer Materialblock ausgeführt ist.

5. Aktivierungseinrichtung nach einem der vorangehenden Ansprüche,
**dadurch gekennzeichnet,**
**dass** das Dämpfungselement (10) aus einem elastischen Material, insbesondere einem Polymer ist.

6. Aktivierungseinrichtung nach Anspruch 5,
**dadurch gekennzeichnet,**
**dass** das Dämpfungselement (10) aus Silikon ist.

7. Aktivierungseinrichtung nach einem der vorangehenden Ansprüche,
**dadurch gekennzeichnet,**
**dass** das Lagerelement (5) über mehrere, insbesondere wenigstens drei Verbindungsstege (6) mit dem Träger (7) verbunden ist.

8. Aktivierungseinrichtung nach einem der vorangehenden Ansprüche,
**dadurch gekennzeichnet,**
**dass** die Stegbreite des oder jedes Verbindungsstegs (6) gesehen in Umfangsrichtung kleiner als die Steghöhe ist.

9. Aktivierungseinrichtung nach Anspruch 8,
**dadurch gekennzeichnet,**
**dass** das Verhältnis von Stegbreite zu Steghöhe zwischen 1:1,1 und 1:3 liegt, und wenigstens 1:1,5, vorzugsweise wenigstens 1:2 beträgt.
